# EUROPEAN PATENT APPLICATION

(11) **EP 4 811 687 A1**
(43) Date of publication of application: **23.09.2026**
(21) Application number: 25165385.3
(22) Date of filing: 21.03.2025
(51) Int. Cl.: H04J 3/06, H04L 47/34, H04W 28/10, H04W 56/00, H04W 84/18, H04L 65/00

(54) **WIRELESS RADIO COMMUNICATION WITH MESH DISTRIBUTION OF AUDIO**

(71) Applicant: RTX A/S, 9400 Nørresundby (DK)
(72) Inventor: Griem, Carsten Karger, 9260 Gistrup (DK); Mackenhauer, Thomas Dahl, 9220 Aalborg Øst (DK); Petersen, Jens Toftgaard, 9230 Svenstrup J (DK)
(74) Representative: Plougmann Vingtoft a/s

(57) **Abstract**

A method for communication of audio between a plurality of devices in a wireless radio network connection using a Mesh principle, e.g. a flooded Mesh principle, for distribution of audio data packets from one of the devices to all of the devices in the wireless radio network. The devices are time synchronized (SNC_TDMA) to a predetermined TDMA frame structure with consecutive frames each with a predetermined number of individual slots dedicated for audio data packet transmission. A NOF value indicative of a predetermined number of consecutive frames (NOF) to be used in the Mesh distribution of audio data packets is stored in all devices. By transmitting (T_ADP) an audio data packet in a slot of a frame, a Time-To-Play (TTP) counter is associated with each audio data block in the audio data packet. When another device receives the audio data packet, received audio data blocks are buffered along with their associated TTP counters. The individual TTP counters for the buffered audio data block are updated once for each frame. Finally, the device plays audio according to one or more buffered audio data blocks in time synchronization with the TDMA frame structure, when the TTP counter associated with the one or more buffered audio data blocks indicates that the NOF value is reached. With the TTP counter and NOF value, it is ensured that distributed audio will be played simultaneously by all devices having received the audio with a known latency.

## Description

### FIELD OF THE INVENTION

The present invention relates to the field of wireless radio transmission of audio. For example, one-way wireless audio streaming or two-way communication of audio, such as in an intercom system. Specifically, the invention proposes a Mesh distribution, e.g. flooded Mesh distribution, of audio in a wireless radio network with a plurality of devices. Specifically, the invention proposes distribution of audio which can be synchronously played by all devices in the wireless radio network, with a fixed latency.

### BACKGROUND OF THE INVENTION

Intercom devices based on wireless radio connection often suffer from a poor audio performance. For example, broadcasting of a speech signal from one intercom device to many differently located intercom devices can be difficult with only a limited radio coverage.

A larger radio coverage can be obtained by relaying audio packets between the intercom devices according to a Mesh distribution strategy. However, this means that a substantial latency can be expected in some cases. This can be critical in an intercom system since it hinders effective voice communication. Further, if the intercom devices are mobile, the Mesh routing will need to be constantly updated, which can be a complex task in case of highly mobile intercom devices which will lead to a low quality of service.

For some applications of intercom systems, e.g. for mission critical operations, a low latency and a high quality of service are crucial parameters. This is difficult to achieve for mobile intercom devices in a Mesh network.

### SUMMARY OF THE INVENTION

Thus, according to the above description, it is an object of the present invention to provide a method for broadcasting of audio, e.g. between mobile wireless radio intercom devices, where a low latency and a high quality of service are requirements.

In a first aspect, the invention provides a method for communication of audio between a plurality of devices, such as intercom devices, such as devices with unique identities (ID), in a wireless radio network connection using a Mesh principle, e.g. a flooded Mesh principle, for distribution of audio data packets from one of the devices to all of the devices in the wireless radio network, wherein the method comprises:
- time synchronizing the plurality of devices to a predetermined TDMA frame structure with consecutive frames each with a predetermined number of individual slots dedicated for audio data packet transmission,
- storing, in the plurality of devices, a NOF value indicative of a predetermined number of consecutive frames (NOF) to be used in the Mesh distribution of audio data packets,
- transmitting, by one of the devices, an audio data packet in a slot of a frame, wherein the audio data packet contains:
   - at least one audio data block representing audio originating from said one of the devices or representing audio received from another one of the devices via the wireless radio network, and
   - a Time-To-Play (TTP) counter associated with at least one audio data block,
- receiving, by another one of the devices, the audio data packet,
- buffering, by said another one of the devices, the received at least one audio data block and the associated TTP counter,
- updating, such as decrementing, by said another one of the devices, the TTP counter for the buffered audio data block once for each frame, and
- playing, by said another one of the devices, audio according to one or more buffered audio data blocks in time synchronization with the TDMA frame structure, when the TTP counter associated with the one or more buffered audio data block indicates that the NOF value is reached.

Such method is advantageous e.g. for mobile intercom systems with real-time communication of audio. The method allows a high spatial coverage of the wireless radio network while at the same time ensures simultaneous playing of an audio message at all devices in the network with a fixed latency, thus allowing the method to be used for real-time applications such as intercom. Still, a high quality of service is provided by the (flooded) Mesh distribution structure, since an audio data packet can reach the final receiver device via different relay routes of devices. Even if the devices are dynamically moving, the (flooded) Mesh distribution strategy ensures that audio data packets can be distributed in an efficient manner. Still further, using a flooded Mesh principle a more reliable coverage is obtained, since audio can travel via multiple redundant routes.

The advantageous effects are possible by the synchronized TDMA frame structure in combination with a (flooded) Mesh distribution, the predetermined NOF value and the TTP counter which is updated every frame. The NOF value can be set as a compromise between spatial coverage and the latency. Together with the TTP counter, the NOF value determines how many TDMA frames an audio data packet is relayed and/or buffered until it is played at the receiver device(s). Thus, if the prestored NOF value is high, a large number of hops in the Mesh distribution of audio data packets is allowed. Thereby, a large spatial coverage is possible at the price of a higher fixed latency.

An audio data block from a transmitter device is buffered by receiver devices, and its associated TTP counter is updated once every frame, and when the NOF value is reached, the audio data block is played. This ensures simultaneous playback of the audio data block at all receiver devices, and further the latency is fixed and thus known.

In case the method is used in an intercom system, it is possible to buffer audio data blocks from different simultaneous transmitters (talkers), updating and monitoring their individual TTP counters to ensure correct playback time. The maximum number of talkers can be selected. Still, it is possible to implement the method, so that audio from a device can be prioritized even if the maximum number of talkers is utilized, e.g. for emergency messages.

There are different ways to provide a control of the Mesh distribution. In case of a flooded Mesh distribution, without any control, devices may in some cases receive audio data blocks from a large number of other devices, so there is not enough capacity in a slot to relay all received audio data blocks. In such case, the devices can be configured to prioritize relay of received audio data blocks with a low TTP, so as to obtain that old audio data blocks are relayed before new audio data blocks, based on the TTP. Thus, audio data blocks with a high TTP (new audio data blocks) may be stored and transmitted in a later frame, if at all.

The below phrases will be used:
- Time Division Multiple Access (TDMA).
- Digital Enhanced Cordless Telecommunications (DECT).
- A single radio event, e.g. transmitting or receiving, is denoted a slot or time slot.
- A frame is understood as a repeated sequence of slots for wireless radio transmission is denoted a frame. One frame may be subdivided into sub frames.
- Time synchronization is understood as a procedure to ensure that devices in a wireless radio network are all time synchronized to the sequence of frames, so as to allow the individual devices to transmit or receive in a specific slot or slots of the frames.

In the following preferred embodiments and features will be described.

In preferred embodiments, the method comprises receiving and buffering the audio data packet, by a plurality of devices within the wireless radio network, and playing audio time synchronized, by the plurality of devices, according to the at least one audio data block, when the TTP counter associated with the audio data block indicates that the NOF value is reached. Thus, in such embodiment audio from one device can be broadcasted to e.g. all devices in the wireless radio network.

The format of an audio data packet can be selected based on the requirements in the specific application where the method is used.

In some embodiments, the audio data packet contains:
- at least one audio data block representing audio originating from said one of the devices, and
- an individual TTP counter associated with said at least one audio data block, wherein the TTP counter is set according to the stored NOF value.

In this embodiment own audio data from the device are included in an audio data packet.

In some embodiments, the audio data packet contains:
- at least one audio data block representing audio received from another one of the devices via the wireless radio network, and
- an individual TTP counter associated with said at least one audio data block.

In this embodiment relayed audio data are included in an audio data packet.

In some embodiments, the audio data packet contains:
- a plurality, such as 2-10, such as 2-6, such as 2-4, of audio data blocks originating from said one of the devices, and
- an individual Time-To-Play (TTP) counter associated with each of said audio data blocks.

In this embodiment more audio data blocks originating from the device itself are included in an audio data packet.

In some embodiments, the audio data packet contains:
- a plurality, such as 2-10, such as 2-6, such as 2-4, of audio data blocks representing audio received from another one of the devices via the wireless radio network, and
- an individual Time-To-Play (TTP) counter associated with each of said audio data blocks.

In this embodiment more relayed audio data blocks are included in an audio data packet.

In preferred embodiments, the audio data packet contains at least one own audio data block and a plurality of relayed audio data blocks.

One audio data packet preferably contains a predetermined plurality of audio data blocks, such as 2-10, such as 2-6, such as 4. Especially, each of the plurality of devices may be configured to select how to utilize said predetermined plurality of audio data blocks for a transmission of an audio data packet. Especially, each of the plurality of devices may be configured to determine to utilize said predetermined plurality of audio data blocks as a mix of one or more audio data blocks representing audio originating from the device itself and one or more audio data blocks representing audio received from another one of the devices.

Each of the devices may be configured to relay received audio data blocks, such as in a consecutive frame, unless the TTP counter associated with the received audio data block indicates that the stored NOF value is reached. In this way relay of audio is limited by means of the TTP counter.

In some embodiments, the Mesh distribution principle is a flooded Mesh distribution principle. Thus, in a flooded Mesh distribution, audio data packets are broadcasted and relayed to all other devices within the wireless radio network. This type of distribution may be preferred, e.g. for distribution of audio between mobile intercom devices.

In some embodiments, the Mesh distribution principle is a routing Mesh distribution principle. In a routing Mesh distribution, audio data packets are at least partly relayed along a predetermined route between a transmitter device and a receiver device.

Each of the devices may be configured to prioritize relay of received audio data blocks based on their associated TTP counters, such as relaying an old audio data block before a new audio data block. Thus, a prioritizing algorithm can be implemented where the TTP counter is used to evaluate an order of relaying of audio data blocks, in case not all audio data blocks can be relayed due to lack of capacity. Preferably, the highest priority is to relay the oldest audio data blocks first, while later audio data blocks can wait to be transmitted in a later frame.

Further, in case of a flooded Mesh distribution, more control features may be implemented to prevent overflooding.

Each of the devices may have a unique identity (ID), and wherein the audio data packet further contains data indicative of an identity (ID) of the device from which the at least one audio data block originates.

Each of the devices is configured to buffer audio data blocks representing audio originating from a predetermined plurality of different devices, such as each of the devices being configured to buffer audio data blocks representing audio originating from 2-16, such as 2-10, such as 2-6, such as 2-4, such as 4, different devices. This allows multiple simultaneously actively audio generating devices (active talkers). Especially, each of the devices may be configured to update each individual TTP counter for the respective buffered audio data blocks once for each frame. Specifically, each of the devices may be configured to determine, after an audio data block has been received, if an audio data block is already buffered.

Each of the devices may be configured to generate an indication, such as visible or audible or tactile, to a user when it is determined that a maximum number of actively transmitting devices is currently reached. In case of an intercom device, this allows a user to postpone talking when the capacity is reached.

One of the devices may be appointed to act as time synchronization master to ensure that the remaining devices can time synchronize to the TDMA frame structure. In this way, devices with similar hardware can operate without the need for a specific base station device to act as synchronization master.

Each of the devices may be configured to transmit, in the slot of the frame, an application data packet containing at least one application data block along with the at least one audio data packet. Especially, the application data block may contain data indicative of information related to event signaling, battery status and other MMI related signaling between the devices. Especially, each of the devices may be configured to communicate via the application data block which of the devices are currently within the wireless radio network. Especially, at least one of, such as a plurality of, the devices is configured to indicate to a user, such as by one or more LEDs or a display, which devices are currently available in the wireless radio network. In case of intercom devices, this may be an important feature to know which other devices (persons) that can be currently contacted.

In some embodiments, each of the devices comprises:
- a user interface,
- a processor system comprising a memory configured to operate as an audio buffer for buffering received audio data blocks,
- a wireless radio transceiver configured to transmit and receive audio data packets time synchronized with the TDMA frame structure, and
- a playback system configured to play audio according to received audio data blocks. Especially, the devices may further comprise a microphone system configured to capture acoustic signals and to generate audio data blocks accordingly to be transmitted in audio data packets. Specifically, each of the devices may have a Push-To-Talk (PTT) function, and where each of the devices is configured to capture acoustic signals by the microphone system and to transmit consecutive audio data packets with consecutive audio data blocks accordingly, when the PTT function of the intercom device is activated. A Voice Activity Detector may also be used for automatic detection of when a user is an active talker.

In some embodiments, each of the devices comprises a housing, and wherein a battery inside the housing served to power the device.

In some embodiments, a length of each frame may be 1-1,000 ms, such as 1-100 ms, such as 5-40 ms, such as 10-30 ms, such as 15-25 ms, such as 20 ms.

In some embodiments, each frame may contain 10-100 slots, such as 20-60 slots, such as 48 slots.

In some embodiments, each frame contains first and second sub-frames, wherein the first sub-frame contains a number of slots for transmission of a set of audio data packets, and wherein the second sub-frame contains slots for re-transmission of the set of audio data packets.

In some embodiments, a part of slots of each frame is dedicated to transmission of audio data packets, while another part of the slots of each frame is dedicated for use in handover or in general wireless protocol control data e.g. slot and channel handover coordination.

In some embodiments, each of the slots has a length of 0.01-10.0 ms, such as a length of 0.1-5.0 ms, such as a length of 0.1-1.0 ms, such as length of 0.2-0.6 ms, such as 0.3-0.5 ms.

The choice of preferred frame and slot structure depends on the actual application for the method for communication of audio.

In some embodiments, it may be possible to store, in the plurality of intercom devices, the NOF value in response to a user request, such as increasing or decreasing a previously stored NOF value in the plurality of intercom devices.

The stored NOF value may be 1-10, such as 2-6, such as 3 or 4. The preferred value may depend on the actual application of the method.

Preferably, a latency from an original transmission of an audio data packet from one of the devices until playing of audio according to said audio data packet at other ones of the devices has a fixed value of 1-1,000 ms, such as 10-1,000 ms, such as 100-1,000 ms. This value is determined from the frame length, and the NOF value.

In some embodiments, one or more of the devices are configured to be prioritized over other ones of the devices. Especially, each of the devices are programmed to prioritize relay of audio data blocks received from said one or more of the devices, so as to allow broadcasting of audio from said one or more of the devices in the radio network in spite a maximum number of actively transmitting devices is currently reached. This may be important for emergency messages e.g. by a leader in a mission critical intercom session.

Especially, the audio data in an audio data block may represent a digital audio signal sampled at a sampling frequency of 8 kHz or more, such as 16 kHz or more, such as 32 kHz, 48 kHz or more. The digital audio signal may be an encoded digital audio signal, such as encoded according to an ADPCM algorithm or the like.

In some embodiments, the predetermined TDMA frame structure may be implemented as a DECT compatible protocol, especially a DECT protocol which is compatible with requirements of one or more regional or country DECT compatible variants.

Alternative protocols are: Zigbee, Classic Bluetooth, Bluetooth Low energy, WiFi, DECT2020, Lora, LTE, 5G and other proprietary wireless protocols. These protocols may be used as standardized protocol or in modified versions to optimize performance in a (flooded) Mesh distribution system.

In some embodiments, some of the devices are portable devices, while one or more devices are stationary devices. In this way, e.g. one or more stationary devices located at specific positions can be used to support spatial coverage for distribution of audio in the wireless radio network with a plurality of portable (intercom) devices.

In a second aspect, the invention provides a device, such as an intercom device, configured to operate as one of the plurality of devices according to the first aspect.

Preferably, the device comprises:
- a wireless radio transceiver configured to transmit and receive audio data packets,
- a processor system with a processor and an associated memory, wherein the memory is configured for storing a Number-of-Frames (NOF) value indicating a predetermined number of frames to be used in the Mesh distribution of audio data packets,
- a playback system configured to play audio according to received audio data blocks,
wherein the device is further configured to:
- time synchronize the wireless radio transceiver to a predetermined TDMA frame structure with consecutive frames each with a predetermined number of slots dedicated for audio data packet transmission by respective ones of the intercom devices,
- transmit an audio data packet in a slot of a frame, wherein the audio data packet contains at least:
   - one audio data block representing audio originating from the device or representing an audio data block received from another device, and
   - an individual Time-To-Play (TTP) counter associated the at least one audio data block,
- receive an audio data packet from another device by the wireless radio transceiver via the wireless radio network,
- buffer one or more audio data blocks and their associated TTP counters received in said audio data packet,
- update, such as decrement, the TTP counter for each of said buffered audio data blocks once for each frame, and
- play audio by the playback system according to one or more buffered audio data blocks in time synchronization with the TDMA frame structure, if the TTP counter associated with the one or more buffered audio data block indicates that the NOF value is reached, such as when the TTP counter equals zero or one frame after the TTP counter equals zero.

The device may be a portable intercom device, e.g. a wireless radio intercom device or a wireless loudspeaker, e.g. a portable or a stationary wireless loudspeaker.

The device may comprise a battery for powering the processor system, the wireless radio transceiver, the microphone system, and the playback system. Thus, allowing the device to operate independent from an external power source.

The device may comprise a microphone system configured to capture acoustic signals. Further, the device may be configured to generate audio data blocks according to acoustic signals captured by the microphone system. Especially, the device may comprise a user interface comprising a Push-To-Talk (PTT) bottom to allow a user to activate transmission of audio data blocks representing audio signals captured by the microphone system. In this way, the device may be an intercom device where a user can use the PTT bottom to actively transmit speech to other intercom devices in the wireless radio network. Voice Activity Detection (VAD) can be used as an alternative or in addition to a PTT bottom.

The device may comprise an indicator configured to inform a user about which other intercom devices are currently available in the wireless radio network. This is relevant e.g. for intercom devices, where a user can be informed if some intercom devices in the wireless radio network are out of reach.

The device may comprise an indicator configured to inform a user if a maximum number of active talkers in the wireless radio network is currently reached or not. This may be determined by the device by checking if all of the audio buffers, one audio buffer for each active talker, are currently occupied with audio data blocks. With this information, the user can choose to wait to talk until the number of active talkers is below the maximum capacity.

The playback system preferably comprises at least one of: a loudspeaker, a headset, an earphone, and a headphone for playing audio according to received audio data blocks to the user.

The device may be configured to buffer received audio data blocks representing audio originating from a predetermined plurality of different devices. For example, the device may be configured to buffer audio data blocks representing audio originating from 2-10, such as 2-6, such as 4 different devices. Especially, the device may further be configured to:
- update TTP counters for the respective buffered audio data blocks once for each frame, and
- to play audio by the playback system according to the buffered audio data blocks synchronized with the TDMA frame structure, when their respective TTP counters indicate that the NOF value has been reached.

The wireless radio transceiver may in some embodiment be configured to operate according to a DECT compatible protocol. Specifically, one DECT frame may be subdivided into two subframes, where slots of the first subframe are used for audio data packet transmission, while the second subframe is used for re-transmission of the same audio data packet as the first subframe, thereby increasing chance of successful transmission.

The wireless radio transceiver may be configured to operate according to a radio protocol, such as: DECT, Zigbee, Classic Bluetooth, Bluetooth Low energy, WiFi, DECT2020, Lora, LTE, 5G and other proprietary wireless protocols.

In a third aspect, the invention provides an intercom system comprising a plurality of devices according to the second aspect, e.g. 2-50, 2-20, or 2-15 devices according to the second aspect. Specifically, the intercom system may comprise a plurality of similar devices with unique identities. Especially, all of the plurality of devices have the same NOF value stored in memory, so as to allow the devices to cooperate to provide a consistent audio playback latency.

In some embodiments, one of the devices is configured to act as a prioritized intercom device so that audio data block representing audio originating from said intercom device will be relayed by other intercom devices in the wireless radio network even if a maximum number of active talkers is reached.

In a fourth aspect, the invention provides use of the intercom system according to the third aspect for voice communication, such as for a voice communication among persons during a mission critical event, such as for voice communication among persons in an emergency team. Other examples of use are: team coordination during sport events, work teams, construction workers, or forest workers. Still other examples of use are: motorcycling, mountain climbing, cycling, outdoor, or marine.

In a fifth aspect, the invention provides use of the device according to the second aspect for streaming of audio to be played in time synchronization by the plurality of devices, such as for streaming of multi-channel audio to a plurality of devices comprising loudspeakers, such as one or more sets of stereo or mono loudspeakers, or one or more sets of surround sound loudspeakers.

It is to be understood that the required wireless radio transmitter and wireless radio receiver circuits, antenna and programming required to implement the method according to the first aspect will be known by the skilled person based on the present description of the inventive method. The method is applicable for use in connection with different wireless radio protocols. The choice of wireless radio protocol will depend on actual use case, such as depending on parameters as: radio coverage, maximum acceptable audio latency, maximum number of devices in the wireless radio network, maximum number of active talkers, available radio spectrum etc.

It is appreciated that the same advantages and embodiments described for the first aspect apply as well the further mentioned aspects. Further, it is appreciated that the described embodiments can be intermixed in any way between all the mentioned aspects.

### BRIEF DESCRIPTION OF THE FIGURES

The invention will now be described in more detail with regard to the accompanying figures of which
FIG. 1 illustrates an example of a plurality of devices at different spatial locations, where radio coverage of each device is indicated, and an example of audio broadcasting of audio from one device with relay by other devices is illustrated,
FIG. 2 illustrates an example of a TDMA frame and slot structure based on a DECT frame,
FIG. 3 illustrates an example of audio buffering and the concept of a Time-To-Play (TTP) counter to ensure simultaneous playback of audio by all devices in the wireless radio network,
FIG. 4 illustrates by an example the connection between the Number Of Frame (NOF) value and the synchronous playback of an audio stream with a fixed latency,
FIG. 5 illustrates a block diagram of an intercom device embodiment, and
FIG. 6 illustrates steps of a method embodiment.

The figures illustrate specific ways of implementing the present invention and are not to be construed as being limiting to other possible embodiments falling within the scope of the attached claim set.

### DETAILED DESCRIPTION OF THE INVENTION

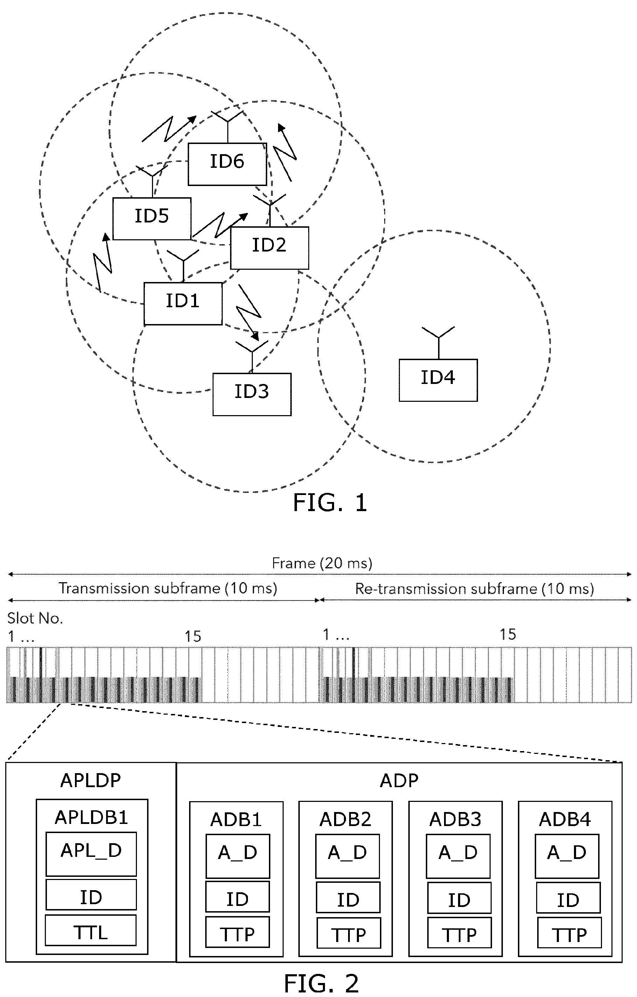

FIG. 1 shows a sketch of wireless radio devices with unique identities ID1-ID6, e.g. intercom devices, at different spatial locations. In case of intercom devices, FIG. 1 can be seen as an illustration at one point in time, since the devices ID1-ID6 may be mobile and thus dynamically change location over time.

The dashed line indicates radio coverage of each device ID1-ID6.

The arrows indicate transmission of an audio data block originating from ID1. Basically, FIG. 1 illustrates a simple example of Mesh distribution of audio, especially a flooded Mesh distribution of audio. Thus, the devices ID1-ID6 are all time synchronized and configured to relay audio in consecutive TDMA frames to all other device within radio coverage. Each device has a dedicated slot in each frame for transmission of an audio data packet including one or more audio data block each representing audio samples.

As seen in FIG. 1, in the first TDMA frame, the original audio data block transmitted from ID1 reaches ID2, ID3 and ID5. In the subsequent frame, ID2, ID3 and ID5 all relay the audio data block originating from ID1, and the radio signal now reaches ID6 in two versions, namely both as audio data blocks relayed from ID2 and from ID5. In this way, the flooded Mesh distribution scheme results in ID6 receiving the audio transmitted originally by ID1 in a robust manner, since two devices ID2 an ID5 serve to relay the audio via respective routes.

ID4 is out of reach for the relay transmission by any of the other devices.

The example of FIG. 1 is simple with only one audio generating device, however with several simultaneous actively audio generating devices, the number of audio data blocks, and if many devices are within radio coverage, the number of received audio data blocks can be very large. Especially, the same audio data block can reach one receiver via different relay routes.

To control the flooded Mesh distribution, the invention introduces a Time-To-Play (TTP) counter which is included in audio data packets and a TTP counter value associated with each individual audio data block to indicate when the audio data block is to be played at a receiver device. Thus, received audio data blocks are buffered along with their TTP counter, and the TTP counters are updated once for each frame when buffered.

In each device, the same Number-Of-Frames (NOF) value is stored. This NOF value indicates a predetermined number of consecutive frames to be used in the flooded Mesh distribution of audio data packets from transmission of an original audio data block to playback of audio accordingly at a receiver device. When a device transmits an audio data block originating from the device itself, it is associated with a TTP set equal to the NOF value.

The NOF value indicates the maximum hops to be accepted before reaching a receiver device and thus also the maximum coverage. Further, with a given frame length (or duration), the NOF value determines the fixed time latency from transmission of original audio to playback of the audio. Therefore, with a suitable frame length (duration) and a suitable NOF value, it is possible to obtain a compromised between spatial coverage and latency which is acceptable for real-time applications such as intercom. E.g. a latency of 0.001-1 second or such as 0.1-1 second may be selected as a fixed latency.

In each device, buffered audio data blocks originating from one or more other devices are played back in time synchronization with the TDMA frame structure, when the individual TTP counter associated with the audio data block indicates that the NOF value is reached. In this way, it is ensured that a broadcasted audio data block is played simultaneously by all receiver devices, no matter which relay route of other device the audio data block has been on its way to the receiver.

The TTP counter further acts as a control in the flooded MESH distribution, since when the TTP has expired for an audio data block, the block will not be relayed. In this respect, the TTP counter additionally acts as the Time-To-Live TTL concept known to avoid overflooding in traditional MESH networks.

Latency and time synchronization for playback is a crucial parameter in some applications. E.g. in intercom systems or in streaming of audio to separate loudspeaker devices each playing one channel of a stereo or surround sound audio stream. In intercom systems, a rather short and consistent latency is important for effective voice communication. For audio streaming to playback devices the latency itself is less important, but a tight time synchronization for playback is crucial for multi-channel or multi-room audio. Both selection of a suitable latency and a tight playback time synchronization can be obtained with the method according to the invention.

FIG. 2 illustrates an example of a specific frame and slot structure for implementation of the method of the invention. In the example, a DECT based frame structure is shown with slots numbered 1-15 out of the total of 24 slots, thus for handling up to 15 devices in a wireless radio network, e.g. up to 15 intercom devices. As seen, the frame is indicated as an example with a length of 20 ms. The frame is divided into two subframes each of 10 ms, and the first subframe is for transmission of audio data packets, while the second subframe is dedicated to re-transmission of the same audio data packets.

The 15 slots are dedicated to respective ones of the devices, and the bottom part of FIG. 2 illustrates a specific example of the data content of a transmission in each slot. As indicated, each transmission contains one audio data packet ADP and one application data packet APLDP.

The audio data packet contains in this example four audio data blocks ADB1, ADB2, ADB3, ADB4. Each of these audio data blocks ADB1, ADB2, ADB3, ADB4 includes: audio data A_D (e.g. data representing an encoded audio sequence), an identification ID of origin of the audio data, and a TTP counter (e.g. an integer value) indicating Time-To-Play of the audio data.

Specifically, one audio data block ADB1 can be used for audio originating from the device itself, while the remaining blocks ADB2, ADB3, ADB4 can be dedicated to relay of audio received from other devices. In case of an intercom device, the device may be configured to select to use all four audio data blocks for relay transmission if the intercom device itself is not used for actively talking. In other applications, the mix between use of the available number of audio data blocks between original audio and relay audio may be fixed.

The application data packet APLDP includes in this example only one application data block APLDB1. This block APDLB1 includes: application data APL_D, identification or origin of the application data ID, and a Time-To-Live counter TTL. The application data APL_D can be used to communicate relevant for the (flooded) MESH distribution network. For example, this may include awareness status, i.e. indication of which devices are currently in the network, battery status of the devices, or other types of information which may be relevant to communicate in a specific use case. It is to be understood that the application data packet APLDP can include a plurality of application data blocks, if preferred.

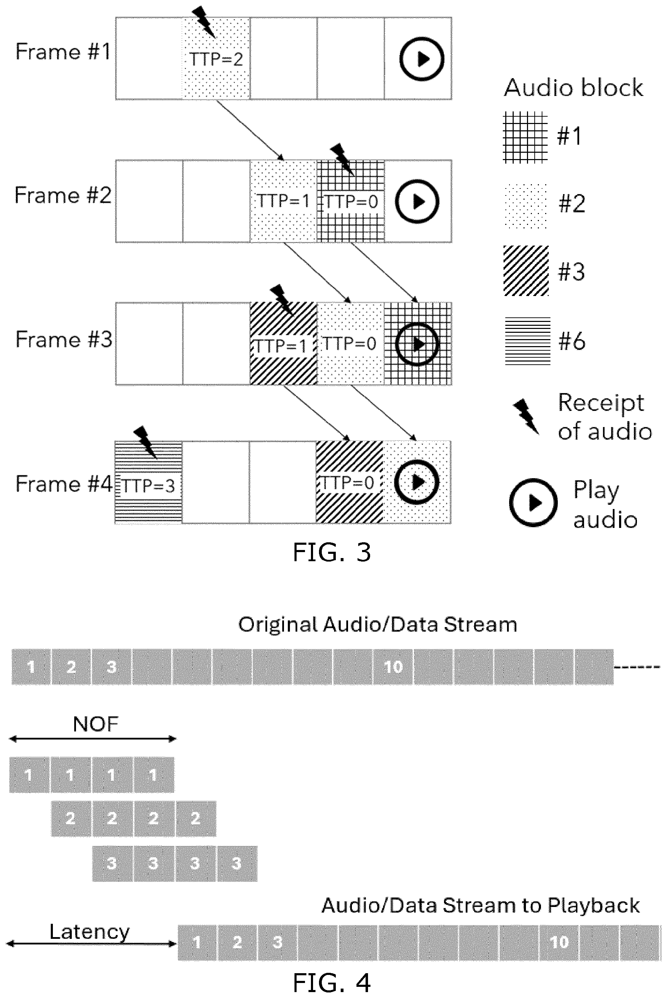

FIG. 3 is a specific example which serves to illustrate the concept of the TTP counter and the audio buffering according to the invention. To the left, FIG. 3 illustrates content of an audio buffer in a device at four times corresponding to four consecutive frames, Frame #1 to Frame #4. To the right, the symbols used are explained. The different patterns indicate different original audio block sequence numbers from one actively transmitting device, e.g. a talker in case of an intercom system.

The bold arrow indicates the time when the device receives the audio data block, and finally a play symbol indicates when the device plays audio corresponding to the audio data block.

As seen the TTP counter is decremented once for each frame, and the frame after the TTP equals zero, it is played by the device.

As seen, three consecutive audio blocks #1, #2, #3 are received as well as audio block #6. Therefore, at the time of frame #4, audio blocks #4, and #5 have for some reason not yet been received, and therefore in the audio buffer there are empty spaces for these missing audio blocks. In case audio block #4 and #5 are not received in the two consecutive frames (frame #5 and frame #6, not shown), there will be a drop out in the played audio.

The illustrated example is rather simple with only one simultaneous talker, but in applications where e.g. four simultaneous talkers, four separate buffers are required together with requirement of updating of all associated TTP counters, and four audio data blocks are then played simultaneously by the device. After playback, the audio data blocks are deleted from the buffer or the content of this part of the buffer is overwritten.

FIG. 4 illustrates the concept of the NOF value and the latency of audio playback. The upper part of FIG. 4 illustrates audio data blocks 1-10 in a stream of audio where the horizontal axis represents time. Audio data block 1 is originally transmitted in one frame from a transmitter device, audio data block 2 is originally transmitted in the next frame, and audio data block 3 is originally transmitted in yet the next frame etc.

The three middle lines of audio data blocks represent relay of each of the audio data blocks 1, 2 and 3 which is repeated until the predetermined NOF is obtained, here for as an example the NOF value is set to four. This means that each of the audio data blocks 1, 2 and 3 are transmitted in four consecutive frames: in the first frame the audio data block is originally transmitted, and then it is relayed three times in the wireless radio network.

The bottom part of FIG. 4 illustrates the playback of the audio stream at a receiver device. By means of the TTP counter (not illustrated in FIG. 4), audio according to audio data block 1 is played back in the frame following the last relay of audio data block 1. The same applies to audio data blocks 2, 3 etc.

Thus, playback latency equals the NOF value times the frame length, in this example four times the frame length. Thus, a large NOF value means larger or more robust coverage at the price of a larger latency, while a low NOF value means less coverage and robustness but a shorter latency.

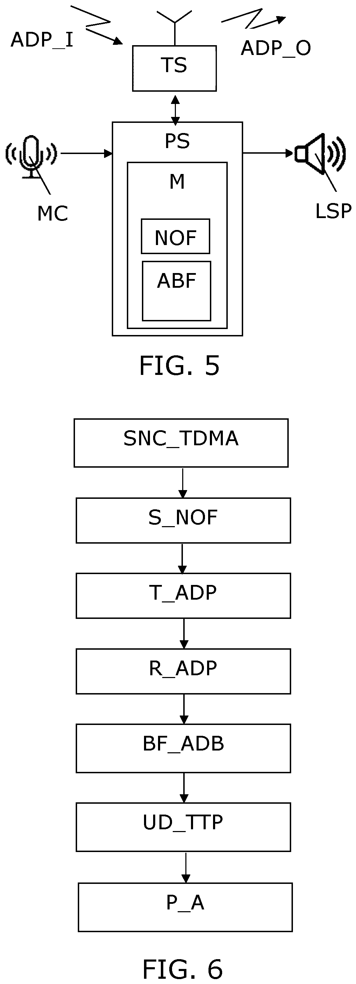

FIG. 5 illustrates a device embodiment, e.g. an intercom device.

The device has a wireless radio transceiver (TS) configured to transmit and receive audio data packets ADP_I, ADP_O in slots time synchronized to a TDMA frame structure.

Further, the device has a processor system PS with a processor and an associated memory M. The processor controls basic operation of the device according to a control algorithm, i.e. including handling of receipt of audio data blocks from other devices and handling of updating of TTP counter during buffering.

The memory M is configured for storing a NOF value indicating a predetermined number of frames to be used in the (flooded) Mesh distribution of audio data packets. Still further, the memory M serves as an audio buffer ABF for buffering received audio data blocks from other devices until it is time to play audio according to the audio data blocks, i.e. indicated by the respective TTP counters.

A microphone system MC is configured to capture acoustic signals, e.g. speech from the user of the device. The device is configured to generate audio data blocks according to acoustic signals captured by the microphone system. This includes generating an audio data block with audio data corresponding to a sequence of captured acoustic signals e.g. in encoded form, a TTP counter with a value determined based on the stored NOF value, and an ID indicating identity of the device itself.

The microphone system preferably comprises an analog-to-digital converter A/D which receives an analog audio signal from a microphone and converts it into a digital format, e.g. operating at a sample frequency of 48 kHz, and applies the digital signal to a digital encoder which is followed by a CRC calculation and applies the resulting data for an encryption (e.g. AES256), and finally the resulting data is included as audio data in an audio data block.

A playback system LSP with a loudspeaker and/or headset/headphone configured to play audio according to buffered audio data blocks when their individual TTP counters indicate so. The playback system may be configured for decoding audio data in an audio data block, and the resulting audio signals. The resulting audio signals may be applied to further processing, which may include Acoustic Echo Cancellation (AEC), a mixing and further sound processing before the final audio output is generated by the loudspeaker/headset/headphone.

The device may further comprise a battery for powering the processor system, the wireless radio transceiver, the microphone system, and the playback system.

In case of an intercom device, the device may comprise a PTT function, such as based on a PTT bottom or a Voice Activity Detector (VAD), to allow a user to indicate when to be an active talker. Further, the device may comprise an indicator, e.g. a display or LEDs or voice prompts played to the user, for indicating which ones of a set of intercom devices which are currently within the wireless radio network. Still further, the device may comprise an indicator for indicating when a predetermined maximum number of talkers are currently active. This may be indicated to the user by a busy tone played to the user, or by a visual indication such as using a display or an LED indicator.

The device, e.g. an intercom device, may be configured for changing the stored NOF value, e.g. to allow a user to reconfigure the NOF value to indicate a maximum allowable number of frames before playback, thereby also indicating how many hops to be available for relay of audio data. For example, the NOF value can be selectable between 1, 2, 3, 4, 5, and 6, e.g.selectable between 2-4. In this way, the device can be adapted to prioritize spatial coverage of the network versus latency. For other applications, the NOF value may be selectable between a larger interval. It is to be understood that all devices in a wireless radio network need to have the same NOF value stored, so as to operate correctly. For example, a change in NOF value in a wireless radio network may be communicated between devices via application data packet(s) included along with communication of audio data blocks. In this way a synchronous change of mode of operation in all devices can be initiated, based on another NOF value.

The device may be configured for forming of groups of a plurality of devices.

In a set of a plurality of devices, one device may be configured to act as TDMA time synchronization master for other devices which are then configured to act as time synchronization slaves. In this way, a set of devices, e.g. a set of intercom devices, can operate without the need for a separate base station.

FIG. 6 illustrates steps of a method embodiment, i.e. a method for time synchronous playback of audio broadcasted from one device to a plurality of devices, such as intercom devices with unique identities, in a wireless radio network connection using a flooded Mesh principle for distribution.

The method comprises time synchronizing SNC_TDMA the plurality of devices to a predetermined TDMA frame structure, e.g. by means of one of the devices acting as synchronization master, with consecutive frames each with a predetermined number of individual slots dedicated for audio data packet transmission. Especially, each device may have its own slot for transmission of audio data packets.

Further, storing S_NOF, in the plurality of devices, a NOF value indicative of a predetermined number of consecutive frames to be used in the flooded MESH distribution of audio data packets. The NOF value may be preprogrammed in memory of the devices, or it may be a reconfigurable value that can be shared in the network between the devices and then stored in all devices.

Further, transmitting T_ADP, by one of the devices, an audio data packet in a slot of a frame, wherein the audio data packet contains:
- at least one audio data block representing audio originating from said one of the devices and at least one audio data block representing audio received from another one of the devices via the wireless radio network, and
- a TTP counter associated with the individual audio data blocks.

Further, receiving R_ADP, by another device, the audio data packet and buffering BF_ADB, by the other device, the received at least one audio data block and the associated TTP counter.

Further, updating UD_TTP, such as decrementing, by the other device, the TTP counter for each buffered audio data block, once for each frame.

Finally, playing P_A, by the other devices, audio according to one or more buffered audio data blocks in time synchronization with the TDMA frame structure, when the TTP counter associated with the one or more buffered audio data block indicates that the NOF value is reached.

In the following, a number of embodiments E1-E54 will be defined.

E1. A method for communication of audio between a plurality of devices in a wireless radio network connection using a Mesh principle, such as a flooded Mesh principle, for distribution of audio data packets from one of the devices to all of the devices in the wireless radio network, wherein the method comprises:
- time synchronizing (SNC_TDMA) the plurality of devices to a predetermined TDMA frame structure with consecutive frames each with a predetermined number of individual slots dedicated for audio data packet transmission,
- storing (S_NOF), in the plurality of devices, a NOF value indicative of a predetermined number of consecutive frames (NOF) to be used in the Mesh distribution of audio data packets,
- transmitting (T_ADP), by one of the devices, an audio data packet in a slot of a frame, wherein the audio data packet contains:
   - at least one audio data block representing audio originating from said one of the devices or representing audio received from another one of the devices via the wireless radio network, and
   - a Time-To-Play (TTP) counter associated with the at least one audio data block,
- receiving (R_ADP), by another one of the devices, the audio data packet,
- buffering (BF_ADB), by said another one of the devices, the received at least one audio data block and the associated TTP counter,
- updating (UD_TTP) by said another one of the devices, the TTP counter for the buffered audio data block once for each frame, and
- playing (P_A), by said another one of the devices, audio according to one or more buffered audio data blocks in time synchronization with the TDMA frame structure, when the TTP counter associated with the one or more buffered audio data blocks indicates that the NOF value is reached.

E2. The method according to E1, comprising receiving and buffering the audio data packet, by a plurality of devices within the wireless radio network, and playing audio time synchronized, by the plurality of devices, according to the at least one audio data block, when the TTP counter associated with the audio data block indicates that the NOF value is reached.

E3. The method according to E1 or E2, wherein the audio data packet contains:
- at least one audio data block representing audio originating from said one of the devices, and
- an individual Time-To-Play (TTP) counter associated with said at least one audio data block, wherein the TTP counter is set according to the stored NOF value.

E4. The method according to any of E1-E3, wherein the audio data packet contains:
- at least one audio data block representing audio received from another one of the devices via the wireless radio network, and
- an individual Time-To-Play (TTP) counter associated with said at least one audio data block.

E5. The method according to any of E1-E4, wherein the audio data packet contains:
- a plurality of audio data blocks originating from said one of the devices, and
- an individual Time-To-Play (TTP) counter associated with each of said audio data blocks.

E6. The method according to any of E1-E5, wherein the audio data packet contains:
- a plurality of audio data blocks representing audio received from another one of the devices via the wireless radio network, and
- an individual Time-To-Play (TTP) counter associated with each of said audio data blocks.

E7. The method according to any of E1-E6, wherein one audio data packet contains a predetermined plurality of audio data blocks.

E8. The method according to E7, wherein each of the plurality of devices are configured to select how to utilize said predetermined plurality of audio data blocks for a transmission of an audio data packet.

E9. The method according to E8, wherein each of the plurality of devices are configured to determine to utilize said predetermined plurality of audio data blocks as a mix of one or more audio data blocks representing audio originating from the device itself and one or more audio data blocks representing audio received from another one of the devices.

E10. The method according to any of E1-E9, wherein each of the devices is configured to relay received audio data blocks unless the TTP counter associated with the received audio data block indicates that the stored NOF value is reached.

E11. The method according to any of E1-E10, wherein the Mesh distribution principle is a flooded Mesh distribution principle.

E12. The method according to any of E1-E11, wherein each of the devices is configured to prioritize relay of received audio data blocks based on their associated TTP counters, such as relaying an old audio data block before a new audio data block.

E13. The method according to any of E1-E12, wherein each of the devices has a unique identity (ID), and wherein the audio data packet further contains data indicative of an identity (ID) of the device from which the at least one audio data block originates.

E14. The method according to any of E1-E13, wherein each of the devices is configured to buffer audio data blocks representing audio originating from a predetermined plurality of different devices.

E15. The method according to E14, wherein each of the devices is configured to update, each individual TTP counter for the respective buffered audio data blocks once for each frame.

E16. The method according to E14 or E15, wherein each of the devices is configured to determine, after an audio data block has been received, if an audio data block is already buffered.

E17. The method according to any of E1-E16, wherein each of the devices is configured to generate an indication to a user when it is determined that a maximum number of devices transmitting audio data blocks representing their own audio is currently reached.

E18. The method according to any of E1-E17, wherein one of the devices is appointed to act as time synchronization master to ensure that the remaining devices can time synchronize to the TDMA frame structure.

E19. The method according to any of E1-E18, wherein each of the devices is configured to transmit, in the slot of the frame, an application data packet containing at least one application data block along with the at least one audio data packet.

E20. The method according to E19, wherein each of the devices is configured to communicate via the application data block which of the devices are currently within the wireless radio network.

E21. The method according to E20, wherein at least one of the devices is configured to indicate to a user which devices are currently available in the wireless radio network, such as by means of a visible or audible indicator.

E22. The method according to any of E1-E21, wherein each of the devices comprises:
- a user interface,
- a processor system comprising a memory configured to operate as an audio buffer for buffering received audio data blocks,
- a wireless radio transceiver configured to transmit and receive audio data packets time synchronized with the TDMA frame structure, and
- a playback system configured to play audio according to received audio data blocks.

E23. The method according to E22, further comprising a microphone system configured to capture acoustic signals and to generate audio data blocks accordingly to be transmitted in audio data packets.

E24. The method according to E23, wherein each of the devices has a Push-To-Talk (PTT) function, and where each of the devices is configured to capture acoustic signals by the microphone system and to transmit consecutive audio data packets with consecutive audio data blocks accordingly, when the PTT function of the intercom device is activated.

E25. The method according to any of E1-E24, wherein each of the devices comprises a housing, and wherein a battery inside the housing served to power the device.

E26. The method according to any of E1-E25, wherein a length of each frame is 1-1,000 ms, such as 10-30 ms, such as 15-25 ms, such as 20 ms.

E27. The method according to any of E1-E26, wherein each frame contains 10-100 slots, such as 20-60 slots, such as 48 slots.

E28. The method according to any of E1-E27, wherein each frame contains first and second sub-frames, wherein the first sub-frame contains a number of slots for transmission of a set of audio data packets, and wherein the second sub-frame contains slots for re-transmission of the set of audio data packets.

E29. The method according to any of E1-E28, wherein a part of slots of each frame is dedicated to transmission of audio data packets, while another part of the slots of each frame is dedicated for use in handover.

E30. The method according to any of E1-E29, wherein each of the slots has a length of 0.01-10.0 ms, such as a length of 0.1-5.0 ms, such as a length of 0.2-1.0 ms, such as 0.3-0.5 ms.

E31. The method according to any of E1-E30, comprising storing, in the plurality of intercom devices, the NOF value in response to a user request.

E32. The method according to any of E1-E31, wherein the stored NOF value is 1-10, such as 2-6, such as 3 or 4.

E33. The method according to any of E1-E32, wherein the predetermined TDMA frame structure is implemented as a DECT compatible protocol.

E34. The method according to any of E1-E33, wherein a latency from transmission of an audio data packet from one of the devices until playing of audio according to said audio data packet at other ones of the devices has a fixed value of 1-1,000 ms, such as 10-1,000 ms, such as 100-1,000 ms.

E35. The method according to any of E1-E34, wherein one or more of the devices are configured to be prioritized over other ones of the devices.

E36. The method according to E35, wherein each of the devices are programmed to prioritize relay of audio data blocks received from said one or more of the devices, so as to allow broadcasting of audio from said one or more of the devices in the radio network in spite a maximum number of actively transmitting devices is currently reached.

E37. A device, such as an intercom device, configured to operate as one of the plurality of devices according to any of E1-E36.

E38. The device according to E37, comprising:
- a wireless radio transceiver (TS) configured to transmit and receive audio data packets,
- a processor system (PS) with a processor and an associated memory (M), wherein the memory is configured for storing a Number-of-Frames (NOF) value indicating a predetermined number of frames to be used in the Mesh distribution, such as flooded Mesh distribution, of audio data packets,
- a playback system (LSP) configured to play audio according to received audio data blocks,
wherein the device is further configured to:
- time synchronize the wireless radio transceiver to a predetermined TDMA frame structure with consecutive frames each with a predetermined number of slots dedicated for audio data packet transmission by respective ones of the intercom devices,
- transmit an audio data packet in a slot of a frame, wherein the audio data packet contains at least:
   - one audio data block representing audio originating from the device or representing an audio data block received from another device, and
   - an individual Time-To-Play (TTP) counter associated the at least one audio data block,
- receive an audio data packet from another device by the wireless radio transceiver via the wireless radio network,
- buffer one or more audio data blocks and their associated TTP counters received in said audio data packet,
- update the TTP counter for each of said buffered audio data blocks once for each frame, and
- play audio by the playback system according to one or more buffered audio data blocks in time synchronization with the TDMA frame structure, if the TTP counter associated with the one or more buffered audio data block indicates that the NOF value is reached.

E39. The device according to E37 or E38, being a portable intercom device.

E40. The device according to any of E37-E39, further comprising a battery for powering the processor system, the wireless radio transceiver, the microphone system, and the playback system.

E41. The device according to any of E37-E40, further comprising a microphone system configured to capture acoustic signals, and wherein the device is configured to generate audio data blocks according to acoustic signals captured by the microphone system.

E42. The device according to E41, comprising a user interface comprising a Push-To-Talk (PTT) bottom or a Voice Activity Detector (VAD) to allow a user to activate transmission of audio data blocks representing audio signals captured by the microphone system.

E43. The device according to any of E37-E42, further comprising an indicator configured to inform a user about which other intercom devices are currently available in the wireless radio network.

E44. The device according to any of E37-E43, further comprising an indicator configured to inform a user if a maximum number of active talkers in the wireless radio network is currently reached or not.

E45. The device according to any of E37-E44, wherein the playback system comprises at least one of: a loudspeaker, a headset, an earphone, and a headphone for playing audio according to received audio data blocks to the user.

E46. The device according to any of E37-E45, wherein the device is configured to buffer received audio data blocks representing audio originating from a predetermined plurality of different devices.

E47. The device according to E46, configured to:
- update TTP counters for the respective buffered audio data blocks once for each frame, and
- to play audio by the playback system according to the buffered audio data blocks synchronized with the TDMA frame structure, when their respective TTP counters indicate that the NOF value has been reached.

E48. The device according to any of E37-E47, wherein the wireless radio transceiver is configured to operate according to a DECT compatible protocol.

E49. An intercom system comprising a plurality of devices according to any of E37-E48.

E50. The intercom system according to E49, comprising 3-15 intercom devices according to any of E37-E48.

E51. The intercom system according to E49 or E50, comprising a plurality of similar devices with unique identities.

E52. The intercom system according to any of E49-E51, wherein one of the intercom devices is configured to act as a prioritized intercom device so that audio data block representing audio originating from said intercom device will be relayed by other intercom devices in the wireless radio network even if a maximum number of active talkers is reached.

E53. Use of the intercom system according to any of E49-E52 for voice communication, such as for a voice communication among persons during a mission critical event.

E54. Use of a plurality of devices according to any of E37-E48 for streaming of audio to be played in time synchronization by the plurality of devices, such as for streaming of multi-channel audio to a plurality of devices comprising loudspeakers, such as one or more sets of stereo loudspeakers, or one or more sets of surround sound loudspeakers.

To sum up, the invention provides a method for communication of audio between a plurality of devices in a wireless radio network connection using a Mesh principle, e.g. a flooded Mesh principle, for distribution of audio data packets from one of the devices to all of the devices in the wireless radio network. The devices are time synchronized (SNC_TDMA) to a predetermined TDMA frame structure with consecutive frames each with a predetermined number of individual slots dedicated for audio data packet transmission. A NOF value indicative of a predetermined number of consecutive frames (NOF) to be used in the Mesh distribution of audio data packets is stored in all devices. By transmitting (T_ADP) an audio data packet in a slot of a frame, a Time-To-Play (TTP) counter is associated with each audio data block in the audio data packet. When another device receives the audio data packet, received audio data blocks are buffered along with their associated TTP counters. The individual TTP counters for the buffered audio data block are updated once for each frame. Finally, the device plays audio according to one or more buffered audio data blocks in time synchronization with the TDMA frame structure, when the TTP counter associated with the one or more buffered audio data blocks indicates that the NOF value is reached. With the TTP counter and NOF value, it is ensured that distributed audio will be played simultaneously by all devices having received the audio with a known latency.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for communication of audio between a plurality of devices in a wireless radio network connection using a Mesh principle, such as a flooded Mesh principle, for distribution of audio data packets from one of the devices to all of the devices in the wireless radio network, wherein the method comprises:
- time synchronizing (SNC_TDMA) the plurality of devices to a predetermined TDMA frame structure with consecutive frames each with a predetermined number of individual slots dedicated for audio data packet transmission,
- storing (S_NOF), in the plurality of devices, a NOF value indicative of a predetermined number of consecutive frames (NOF) to be used in the Mesh distribution of audio data packets,
- transmitting (T_ADP), by one of the devices, an audio data packet in a slot of a frame, wherein the audio data packet contains:
- at least one audio data block representing audio originating from said one of the devices or representing audio received from another one of the devices via the wireless radio network, and
- a Time-To-Play (TTP) counter associated with the at least one audio data block,
- receiving (R_ADP), by another one of the devices, the audio data packet,
- buffering (BF_ADB), by said another one of the devices, the received at least one audio data block and the associated TTP counter,
- updating (UD_TTP) by said another one of the devices, the TTP counter for the buffered audio data block once for each frame, and
- playing (P_A), by said another one of the devices, audio according to one or more buffered audio data blocks in time synchronization with the TDMA frame structure, when the TTP counter associated with the one or more buffered audio data blocks indicates that the NOF value is reached.

2. The method according to claim 1, comprising receiving and buffering the audio data packet, by a plurality of devices within the wireless radio network, and playing audio time synchronized, by the plurality of devices, according to the at least one audio data block, when the TTP counter associated with the audio data block indicates that the NOF value is reached.

3. The method according to claim 1 or 2, wherein the audio data packet contains:
- at least one audio data block representing audio originating from said one of the devices, and
- an individual Time-To-Play (TTP) counter associated with said at least one audio data block, wherein the TTP counter is set according to the stored NOF value.

4. The method according to any of the preceding claims, wherein the audio data packet contains:
- a plurality of audio data blocks representing audio received from another one of the devices via the wireless radio network, and
- an individual Time-To-Play (TTP) counter associated with each of said audio data blocks.

5. The method according to any of the preceding claims, wherein one audio data packet contains a predetermined plurality of audio data blocks, and wherein each of the plurality of devices are configured to select how to utilize said predetermined plurality of audio data blocks for a transmission of an audio data packet.

6. The method according to any of the preceding claims, wherein the Mesh distribution principle is a flooded Mesh distribution principle.

7. The method according to any of the preceding claims, wherein each of the devices is configured to prioritize relay of received audio data blocks based on their associated TTP counters, preferably relaying an old audio data block before a new audio data block.

8. The method according to any of the preceding claims, wherein each of the devices is configured to buffer audio data blocks representing audio originating from a predetermined plurality of different devices.

9. The method according to any of the preceding claims, wherein each of the devices is configured to generate an indication to a user when it is determined that a maximum number of devices transmitting audio data blocks representing their own audio is currently reached.

10. The method according to any of the preceding claims, wherein each of the devices is configured to transmit, in the slot of the frame, an application data packet containing at least one application data block along with the at least one audio data packet, wherein each of the devices is configured to communicate via the application data block which of the devices are currently within the wireless radio network.

11. The method according to any of the preceding claims, wherein each frame contains first and second sub-frames, wherein the first sub-frame contains a number of slots for transmission of a set of audio data packets, and wherein the second sub-frame contains slots for re-transmission of the set of audio data packets.

12. The method according to any of the preceding claims, wherein one or more of the devices are configured to be prioritized over other ones of the devices.

13. A device, such as an intercom device, configured to operate as one of the plurality of devices according to any of claims 1-12.

14. The device according to claim 13, comprising:
- a wireless radio transceiver (TS) configured to transmit and receive audio data packets,
- a processor system (PS) with a processor and an associated memory (M), wherein the memory is configured for storing a Number-of-Frames (NOF) value indicating a predetermined number of frames to be used in the Mesh distribution, such as flooded Mesh distribution, of audio data packets,
- a playback system (LSP) configured to play audio according to received audio data blocks,
wherein the device is further configured to:
- time synchronize the wireless radio transceiver to a predetermined TDMA frame structure with consecutive frames each with a predetermined number of slots dedicated for audio data packet transmission by respective ones of the intercom devices,
- transmit an audio data packet in a slot of a frame, wherein the audio data packet contains at least:
- one audio data block representing audio originating from the device or representing an audio data block received from another device, and
- an individual Time-To-Play (TTP) counter associated the at least one audio data block,
- receive an audio data packet from another device by the wireless radio transceiver via the wireless radio network,
- buffer one or more audio data blocks and their associated TTP counters received in said audio data packet,
- update the TTP counter for each of said buffered audio data blocks once for each frame, and
- play audio by the playback system according to one or more buffered audio data blocks in time synchronization with the TDMA frame structure, if the TTP counter associated with the one or more buffered audio data block indicates that the NOF value is reached.

15. An intercom system comprising a plurality of devices according to claim 13 or 14.
